# EUROPEAN PATENT APPLICATION

(11) **EP 2 055 744 A1**
(43) Date of publication of application: **06.05.2009**
(21) Application number: 08165528.4
(22) Date of filing: 30.09.2008
(51) Int. Cl.: C08L 95/00

(54) **Method of producing bituminous concrete using road planings and/or rubber powder, and bituminous concrete produced in this way**

(30) Priority: 31.10.2007 IT GE20070107
(71) Applicant: CONTEC S.R.L., 50013 Campi Bisenzio (FI) (IT)
(72) Inventor: Sarri, Claudio, 50025, MONTESPERTOLI (FI) (IT); Caiani, Simone, 50055, LASTRA A SIGNA (FI) (IT)
(74) Representative: Porsia, Attilio

(57) **Abstract**

Method for the production of an asphalt composition in the form of a hot mix, comprising the steps of mixing a granular and/or powder material with an inert stone material with soft bitumen added in foamed form, characterized in that said granular and/or powder material is composed of road planings. Alternatively, a hard foamed bitumen and/or rubber powder can be added to said composition.

## Description

The present invention relates to a method for producing bituminous concrete at low temperature, using recycled materials such as:
- road planings, in other words material consisting of inert substances and bitumen, resulting from the breaking up of old existing road paving by planing and/or scarification (this material is sometimes also called recycled material or RAP [Reclaimed Asphalt Pavement]);
- rubber powder obtained from the industrial recycling of old tyres.

In recent years, new production technologies have been introduced in the road-building industry, making it possible to use recovered materials such as road planings and rubber powder from recycled tyres.

Existing methods can be used with these materials, but this requires an increase in the production temperatures, which may reach at least 170°C for planings and approximately 200°C for rubber powder.

These high temperatures not only cause a considerable rise in energy consumption but also give rise to a marked increase in atmospheric emissions and smoke generation by the concrete, with the consequent effects on the level of exposure of workers (experimental data show that the smoke generation of the concrete doubles for every 10°C of temperature rise of the concrete).

The principal object of the present invention is therefore to provide a method for the production of bituminous concrete which enables the aforesaid recycled materials to be used while maintaining low production temperatures and achieving high performance levels.

Road planings have been used for some time as recycled material in various proportions, in combination with the fresh concrete, to form new paving, with the advantage of consuming smaller quantities of raw materials (inert materials and bitumen), decreasing quarrying and the corresponding environmental impact, and reducing the amount of material which is sent for waste disposal after being removed from paving subjected to maintenance work.

As mentioned above, the addition of planings during the hot production of the concrete using existing methods makes it necessary to raise the process temperatures by at least 10 - 20°C, with the corresponding negative effects on energy consumption, on atmospheric emissions and on the health of workers.

The processing method according to the present invention makes it possible to use road planings while maintaining low production temperatures (from 90 to 130°C) and spreading temperatures (minimum 85°C), and achieving high levels of performance in use.

During the production of the concrete, the planings are placed in a conventional mixing and drying drum, using a suitable feeder, in variable proportions determined according to the type and performance of the concrete that is to be produced.

The various components of the mix are added to the mixer after proportional weighing and in the following sequence:
- fresh inert stone materials, chippings and sand;
- planings;
- soft bitumen (or foamed soft bitumen);
- hard foamed bitumen;
- filler.

In a variant of the invention, the bituminous concrete can be produced using 100% asphalt planings without the need to add foamed hard bitumen, since use is made of the bitumen present in the asphalt planings, this bitumen contained in the planings being activated when raised to a temperature of 90 to 110°C, after which only the soft bitumen is added, this being a road bitumen with high penetration (more than 700 dmm at 25°C), having a viscosity of less than 0.3 Pa.s at 100°C (ASTM D 2171 method), added in the foamed form. In this method, the planings can be used either in their existing state or after preselection.

In the first case, the planings are used in their existing state, broken into fragments 0 to 25 mm in size; the limited control of the particle size range of the material produced in this way means that the resulting concrete is suitable only for the production of base or binder layers.

The preselection system, on the other hand, is based on an innovative concept for using planings which are crushed and preselected initially by a suitable crushing and selection plant, enabling mixes with particle sizes of 0-12 mm and 12-25 mm to be produced.

Concretes with a particle size of 0-12 mm produced in this way are suitable for use in:
- wearing courses of various types, up to what are known as SMA (Splittmastix Asphalt, special sealed concretes designed to improve adhesion, waterproof the underlying structure and reduce tyre noise);
- conventional and high-modulus binder layers;
- base layers.

Concretes with a particle size of 12-25 mm can be used for:
- binder layers;
- base layers.

The binders used in the process are those which are specified, for example, in EP 1 263 885, namely:
- soft bitumen, in other words a road bitumen with high penetration (> 700 dmm at 25°C) having a viscosity of less than 0.3 Pa.s at 100 °C (ASTM D 2171 method);
- hard bitumen, in other words a road bitumen having a penetration in the range from 10 to 220 dmm at 25°C.

The type of hard bitumen which is actually used (in other words, the selection of its penetration value within the aforementioned range) will depend on the type and expected performance of the final concrete, but must also be suitable for the typical climatic conditions of the area; in all cases it must be specified and verified by a suitable formulation study.

Soft bitumen is kept in the storage tank at a temperature of not more than 120°C and is sprayed from there in its existing state directly into the mixer at a temperature of less than 120°C, preferably in the region of 110°C.

The hard bitumen is kept in the tank at temperatures ranging from 140 to 190°C, depending on the selected grade; before it is added to the mixer, it is foamed (in other words, the volume is expanded by combining the very hot bitumen with water) by suitable equipment so as to reduce its viscosity and enable it to be used at low temperature.

The quantity of hard bitumen to be foamed is measured at the outlet of the storage tank before the bitumen is sent to the foaming equipment. This weighing is carried out by a volumetric method, using a counter which measures the volume of bitumen that has flowed past; this information is essential for the correct management of the whole foaming process. To ensure correct measurement and avoid problems relating to the quality of foaming while avoiding increases in the concrete production time, the system must be capable of modifying the operating temperature of the counter (which is internally heated with diathermic oil), in such a way that it can be matched with a maximum discrepancy of 5°C to the temperature at which the hard bitumen is kept in the tank. As mentioned above, this temperature varies according to the different grades of bitumen used.

The water pressure in the foaming process is kept in the range from 2.5 to 3.5 bars. By varying the ratio of soft to hard bitumen, different penetration values are obtained for the resulting bitumen used in the concrete; the determination of the soft/hard ratio will therefore depend on the type and characteristics of the concrete to be produced.

It follows from the above that:
- a wide range of different penetration values of the final bitumen can be obtained from only two bitumens in tanks, thus simplifying the management and costs of the storage tank system and supply operations;
- when the soft/hard ratios have been determined, the penetration of the final bitumen will remain constant at the expected level, thus providing a more consistent output than in the case where a specific commercial grade of bitumen is obtained from a refinery on different occasions (for example, it is possible to maintain a penetration of 55 dmm and thus avoid the effects of the variability of supplies of the corresponding 50/70 commercial grade, in which the penetration can vary from 50 to 70 dmm for each individual tankload delivered from the refinery).
   The excellent performance of the concretes according to the present invention is also due to the high quality of the bitumen resulting from the interaction between soft and hard bitumen, which gives a performance similar to that of the best modified bitumens, although no polymers or other modifying agents are included.

The concretes according to the present invention can also be used to produce high-modulus concretes, in other words concretes for base or binder layers which are appropriately designed to have a high modulus of rigidity, thus increasing the strength and durability of paving which is subjected to considerable static and dynamic loads and large amounts of heavy vehicular traffic.

Furthermore, by comparison with conventional concretes, the excellent mechanical characteristics of these high-modulus concretes enable road designers to reduce the thicknesses of the complete assembly of bituminous concrete layers while maintaining the same mechanical performance.

A specific advantage of the technology according to the present invention applied to planings is that it has made it possible to achieve high performance in use when using category IV inert materials (calcareous and/or alluvial inert materials with a Los Angeles fragmentation resistance of > 25), which cannot normally provide similar performance when the conventional hot production methods are used.

If higher-quality inert materials (of category I or II for example) are used, additional increases in the aforementioned performance are obtained, the improvement possibly reaching about 25%.

Concretes according to the present invention containing rubber powder It has been known for some time that the incorporation of rubber powder from the industrial recycling of old tyres into bituminous concrete by a hot method improves the mechanical characteristics of the concrete.

A number of trials have also shown that concrete containing rubber powder provides better surface adhesion, making it possible to reduce the braking distances of vehicles and increase safety, while reducing acoustic pollution and vibration caused by traffic.

However, up to the present time it has been necessary to raise the concrete production temperature by at least 20°C in order to use rubber powder, with the consequent effects of increased emissions, smoke and energy consumption.

The innovation introduced by the present invention is the possibility of using this rubber powder while maintaining low production temperatures (110 - 120°C) and producing high-performance concrete for wearing courses, which until now have only been obtainable by using modified bitumens at high temperatures.

The principal types of concrete according to the invention containing rubber powder are:
- draining concretes, in other words concretes with a high void content (> 20%), in which rainwater can run into the concrete itself and can be carried towards the edge of the carriageway, which is appropriately shaped for its run-off; this prevents the formation of a film of surface water and thus eliminates the phenomenon of aquaplaning and the problems of poor visibility due to the spray produced by the passage of vehicles;
- sound-absorbent concretes, in other words concretes which can reduce the acoustic pollution caused by the impact and rolling of tyres on the paving, because they reduce the phenomenon of compression and subsequent expansion of air trapped between the wheels and paving, dissipate the sound energy in the cavities of the concrete, and, if a special surface macrotexture is used, can also reduce the noise of the impact of the tyre on the paving; this yields reductions of 3 to 6 dB(A) in the sound level, corresponding to an increase of 2 to 4 times the distance from the source of the noise;
- anti-skid concretes, in other words concretes having special microtextures of the aggregates and special surface macrotexture of the paving, producing a marked increase in the transverse adhesion factor between the tyre and the road surface, with a positive effect in terms of safety;
- Splittmastix Asphalt (SMA), in other words sealed concretes with a void content from 2 to 4%, characterized by a stone component having discontinuous particle size (with a high content of coarse granules) bound by a high-viscosity matrix composed of bitumen, fillers and stabilizing additives such as mineral fibres, cellulose and others; the advantages of this paving are its stability at high temperatures, flexibility at low temperatures, resistance to ageing, low sensitivity to water, high adhesion between the binder and inert materials which limits stripping, high resistance to furrowing, good adhesion and moderate sound emission reduction;
- anti-vibration concretes, in other words concretes designed to reduce the vibration produced in paving by vehicular and rail traffic; a typical example in the rail industry is that of sub-ballast layers (layers of bituminous concrete underlying the rigid bed on which the tracks are laid), whose capacity for vibration damping is particularly important for modern highspeed lines.

The production method according to the invention makes use of rubber powder, introducing it by a suitable batch feeding system directly into the mixer and using it in partial replacement of the filler.

Since natural or synthetic rubber is an elastomeric polymer with thermoplastic properties similar to those of the polymers used for producing high-performance modified bitumens, the addition of rubber powder gives the concrete better properties due to the presence of a reticular structure similar to that of radial SBS (styrenebutadiene-styrene).

By contrast with the procedure followed when the bitumen is modified, in this case the powder is never added to the bitumen, but is always added directly to the concrete, as described above, at the stage when the inert and fine materials and bitumen are mixed together.

The powder can be used in two ways in the method:
- by preheating it to a temperature of 40 - 60°C before introduction into the mixer; or
- by adding it in its existing state at ambient temperature.
   The method according to the invention always requires the use of two bitumens, namely soft bitumen and hard foamed bitumen, the characteristics and mode of use of which were described in the preceding section and are also valid for this type of material.

In this method, the introduction of the rubber powder into the mixer can take place in three different sequences:
- fresh inert stone materials, chippings and sand;
- rubber powder;
- soft bitumen;
- hard foamed bitumen;
- filler
or
- fresh inert stone materials, chippings and sand;
- soft bitumen;
- rubber powder;
- hard foamed bitumen;
- filler
or, finally,
- fresh inert stone materials, chippings and sand;
- soft bitumen;
- hard foamed bitumen;
- rubber powder;
- filler.

The choice of sequence will depend on the expected characteristics and performance of the final concrete.
The quantity of rubber powder to be used in the method must not exceed 2.5% of the concrete by weight.

In all cases, the ultimate aim is to maximize the use of resources obtained from waste from other processes (as in the case of re-using old tyres), resulting in the recycling of one tyre per square metre of paving.

If a reinforcing microtexture is required in the concrete, in order to increase mechanical strength, the technology enables glass or cellulose fibres to be added to the aforesaid method.

The advantages of the method according to the present invention can therefore be summarized as follows:
- reduction of the concrete production and application temperatures by about 50-80°C compared with normal hot methods;
- reduction of emissions of CO₂ (30%), CO (25%), NOx (60%) and dust (more than 50%) during production, in line with the targets of the Kyoto Protocol;
- elimination of smoke during application;
- reduction of energy consumption by 25% to 35% in the production stage;
- reduction of the bitumen storage management costs, since many different grades can be produced from only two materials (soft and hard) in tanks;
- reduction of the possible human error, due to the smaller number of raw materials (different bitumens) to be managed;
- the possibility of precisely determining the penetration of the final bitumen in the concrete, and thus of maintaining more consistent output than that which would be obtained by acquiring individual grades of final bitumen on the market;
- increased workability of the material, longer-distance transport and the possibility of using it even in the colder seasons;
- where planings are used, lower consumption of raw materials (inert materials and bitumen), reduction of quarrying and its corresponding environmental impact, and reduction of the amount of material sent for waste disposal after being removed from paving subjected to maintenance work;
- also in the case of planings, the possibility of using inert materials of lower categories (more easily available at lower cost) than those specified in current standards for production of high-performance concrete;
- because of the very low proportion of quarried inert materials used, greater financial savings and environmental advantages for public authorities.

Some examples of concrete compositions according to the present invention are given below, purely as non-limiting examples.

### I- General composition of concretes according to the invention, in parts by weight:

Fresh inert stone materials, chippings and sand: from 5 to 94.5% by weight

Planings: from 5 to 80% by weight

Soft bitumen: from 0.3 to 2% by weight

Foamed bitumen: from 3 to 7% by weight

Filler (*): from 0.5 to 15% by weight. (*) In the present description, the term "filler" denotes a powder material, normally calcareous in nature, but which can also be recovered from very fine materials (powder) released by inert materials during their drying in drums.

### EXAMPLE 1

### Concrete according to the invention based on road planings

The following are introduced into a mixer heated to 125°C, in this order:
69 kg of fresh inert stone materials, chippings and sand;
25 kg of planings;
0.7 kg of soft bitumen;
3.3 kg of hard foamed bitumen;
6 kg of filler.

This produces a concrete having the following physical characteristics:

| | |
|---|---|
| Void content: | from 3 to 5% |
| Mean indirect tensile strength: | from 9.5 to 16 daN/cm² |
| Modulus of rigidity at 15°C | from 14,000 to 25,000 MPa |
| Modulus of rigidity at 20°C | from 10,500 to 15,000 MPa |

This concrete is applied by spreading at a temperature from 85 to 125°C.

### Example 2

### Draining concrete with rubber powder according to the invention

The following are introduced into a mixer heated to 125°C, in this order:
91 kg of fresh inert stone materials, chippings and sand;
1 kg of soft bitumen;
5.7 kg of hard foamed bitumen;
7 kg of filler;
2 kg of rubber powder.

This produces a concrete having the following physical characteristics:

| | |
|---|---|
| Void content: | from 18 to 30% |
| Marshall stability | > 400 kg |
| Mean Marshall stiffness | > 150 kg/mm |
| Mean indirect tensile strength: | from 2.5 to 4 daN/cm² |

This concrete is applied by spreading at a temperature from 85 to 125°C.

Clearly, the present invention is not limited to the above description and/or to the examples provided above, but comprises all variants and modifications lying within the wider scope of the following claims.

## Claims

1. Method for the production of an asphalt composition in the form of a hot mix, comprising the steps of mixing a granular and/or powder material with soft bitumen added in foamed form, **characterized in that** said granular and/or powder material is composed of road planings.

2. Method according to Claim 1, comprising the further addition of rubber powder.

3. Method for the production of an asphalt composition in the form of a hot mix according to the preceding claims, comprising the steps of mixing a granular and/or powder material with an inert stone material with soft bitumen, and with the subsequent addition of a hard foamed bitumen, **characterized in that** said granular and/or powder material is composed of road planings and/or rubber powder.

4. Method according to any one of the preceding claims, **characterized in that,** when road planings are used as the granular material, the mixing temperatures are in the range from 120 to 130°C, and particularly from 90 to 110°C.

5. Method according to any one of the preceding claims, **characterized in that** the spreading temperature of the asphalt composition is below 100°C and preferably of the order of 85°C.

6. Method according to Claim 1, in which the content of road planings in the asphalt composition varies from 50% to 100%.

7. Method according to Claim 3, in which the content of road planings in the asphalt composition varies from 10% to 50%, and preferably from 15% to 35%, calculated with respect to the total weight of the asphalt composition.

8. Method according to any one of the preceding claims, in which the road planings used are crushed in their existing state to pieces from 0 to 25 mm in size.

9. Method according to Claim 8, **characterized in that** the crushed planings are selected to form a mixture with a particle size of 0-12 mm and a mixture with a particle size of 12-25 mm.

10. Method according to Claim 9, in which the planing mixtures with a particle size of 0-12 mm are used for wearing courses, conventional and high-modulus binder layers, and base layers.

11. Method according to Claim 10, in which the planing mixtures with a particle size of 12-25 mm are used for binder layers and base layers.

12. Method according to Claim 1 or 3, in which the soft bitumen used is a road bitumen having a high penetration of > 700 mm at 25°C and a viscosity of less than 0.3 Pa.s at 100°C (ASTM D 2171 method).

13. Method according to Claim 3, in which the hard bitumen used is a road bitumen having a penetration in the range from 10 to 220 dmm at 25°C.

14. Method according to any one of the preceding claims, **characterized in that** the components are mixed in a heated mechanical mixer.

15. Method according to Claim 14, in which soft bitumen is kept in a storage tank at a temperature of not more than 120°C and is sprayed from there in its existing state directly into the mixer at a temperature of less than 120°C, preferably in the region of 110°C.

16. Method according to Claim 13, in which the hard bitumen is kept in a tank at temperatures ranging from 140 to 190°C, and before it is added to the mixer it undergoes a foaming process, namely a process in which the volume is expanded by combining the very hot bitumen with water so as to reduce its viscosity and enable it to be used at low temperature.

17. Method according to Claim 16, in which the water pressure in the foaming process is kept in the range from 2.5 to 3.5 bars.

18. Method according to any one of Claims 1 to 17, **characterized in that** said concrete comprises:
| | |
|---|---|
| Fresh inert stone materials, chippings and sand: | from 0 to 94.5% by weight |
| Planings: | from 5 to 100% by weight |
| Soft bitumen: | from 0.3 to 2% by weight |
| Foamed bitumen: | from 0 to 7% by weight |
| Filler: | from 0.5 to 15 % by weight. |

19. Method according to any one of the preceding claims, **characterized in that** rubber powder is added to the concrete in partial or total replacement of the planings at the stage in which the inert materials, fine materials and bitumen are mixed.

20. Method according to Claim 19, in which the rubber powder is preheated to a temperature of 40 - 60°C before it is introduced into the mixer.

21. Method according to Claim 19, in which the rubber powder is introduced into the mixer at ambient temperature.

22. Method according to any one of the preceding claims, **characterized in that** the quantity of rubber powder to be used in the method must not exceed 2.5% by weight of the total concrete.

23. Method according to any one of the preceding claims, in which the sum of inert stone materials + filler + planings/rubber powder is considered equal to 100, and the soft bitumen and hard foamed bitumen are added as a percentage of the weight of said substance.
